# EUROPÄISCHE PATENTSCHRIFT

(11) **EP 0 588 027 B1**
(45) Veröffentlichungstag und Bekanntmachung des Hinweises auf die Patenterteilung: **22.05.1996**
(21) Anmeldenummer: 93111813.7
(22) Anmeldetag: 23.07.1993
(51) Int. Cl.: A01D 25/02, A01D 27/00

(54) **Selbstfahrende zweiachsige, mehrreihige Rübenerntemaschine**
Self-propelled, two-axle, multirow beer harvester
Récolteuse de betteraves multi-rangs, automotrice, à deux essieux

(30) Priorität: 27.08.1992 DE 4228584
(43) Veröffentlichungstag der Anmeldung: 23.03.1994
(73) Patentinhaber: Franz Kleine Maschinenfabrik GmbH & Co., D-33154 Salzkotten (DE)
(72) Erfinder: Lühs, Herbert, D-33142 Büren-Brenken (DE)
(74) Vertreter: Rehberg, Elmar, Dipl.-Ing.

(56) Entgegenhaltungen:
- EP-A- 0 098 824
- EP-A- 0 406 953
- DE-A- 2 647 264
- FR-A- 1 578 088
- FR-A- 2 340 029
- FR-A- 2 533 798
- FR-A- 2 544 163

## Beschreibung

Die Erfindung bezieht sich auf eine selbstfahrende zweiachsige, mehrreihige Rübenerntemaschine, mit einem Maschinenrahmen, mit einem die Entblätterer und Roder tragenden, quer zur Längsachse der Rübenerntemaschine verschiebbar gelagerten Tragrahmen, und mit einem den Rodern nachgeschalteten Walzengang zum schwadmäßigen Zusammenführen der Rüben mehrerer Reihen, sowie mit Siebsternen zum Reinigen und Fördern der Rüben. Die Erfindung bezieht sich insbesondere auf eine sechsreihig ausgebildete Rübenerntemaschine mit zwei Achsen und einem Bunker zur Aufnahme der gerodeten Rüben. Unter einem Entblätterer wird eine Einheit verstanden, die zum Entfernen des Blatts dient und die ggf. aus einem Häcksler, einem Putzer und einem Nachköpfer bestehen kann, wobei über diesen Einheiten noch eine Querfördereinrichtung für das Rübenblatt vorgesehen sein kann. Aber auch in anderer Weise zusammengestellte Entblätterer können hier Anwendung finden.

Eine selbstfahrende sechsreihig ausgebildete Rübenerntemaschine der eingangs beschriebenen Art ist bekannt. Außer dem Maschinenrahmen ist ein Tragrahmen vorgesehen, der die Entblätterer, die Roder, den Walzengang und ein nachgeschaltetes Siebband aufnimmt. Diese gesamte Einheit ist gegenüber dem Maschinenrahmen quer verschiebbar angeordnet, wobei für den Straßentransport der Tragrahmen mit seinen Einheiten symmetrisch zur Längsmittelachse des Selbstfahrers eingestellt wird, während er beim Arbeiten auf dem Feld so seitlich verschoben wird, daß die Räder des Selbstfahrers in eine größere Entfernung von dem Rübenbestand gelangen, so daß die letzte stehenbleibende Rübenreihe weder umgedrückt noch sonstwie beschädigt wird. Die seitliche Verschiebbarkeit des Tragrahmens mit den auf ihm angeordneten Elementen ist in mehrfacher Hinsicht nachteilig. Zum einen erstreckt sich der Tragrahmen mit seinen Elementen auch zwischen den Vorderrädern des Selbstfahrers und verkleinert damit die mögliche Einschwenkung für Lenkbewegungen an den Vorderrädern. Um dem entgegenzuwirken, findet das Siebband zwischen dem Walzengang und nachgeschalteten Siebsternen Verwendung, welches eine relativ geringe Baubreite aufweist. Der weitere wesentliche Nachteil dieser quer verschiebbaren Baueinheit besteht darin, daß sich der Übergabepunkt der Rüben von dem Siebband auf den nachgeschalteten Siebstern, der ortsfest am Maschinenrahmen gelagert ist, bei einer Querverschiebung verändert.

Bei einer weiteren bekannten, sechsreihig arbeitenden Rübenerntemaschine sind die Entblätterer, die Roder, der Walzengang und ein nachgeschaltetes Siebband ebenfalls auf einem Tragrahmen angeordnet, wobei dieser Tragrahmen nicht quer verschiebbar, sondern um eine Hochachse schwenkbar angeordnet ist. Die dem Siebband nachgeschalteten Siebsterne sind wiederum ortsfest am Maschinenrahmen angeordnet. Wenn die Hochachse zum Verschwenken des Tragrahmens etwa im Endbereich des Siebbands angeordnet ist, verändert sich der Übergabepunkt der Rüben von dem Siebband auf den ersten Siebstern vorteilhaft nur wenig. Aber auch hier erbringt das Siebband gravierende Nachteile. Ein Siebband wird grundsätzlich über zwei Umlenkwalzen geführt, die mit ihren Achsen quer zur Fahrtrichtung der Rübenerntemaschine angeordnet sind. Infolgedessen baut ein Siebband grundsätzlich höher als ein Siebstern, dessen Höhe durch die Höhe der Zinken vorteilhaft gering ist. Ein Siebband muß somit relativ dicht über dem Boden arbeitend angeordnet sein, weil das Anheben der Rüben über den Walzengang auch beschränkt ist. Infolgedessen besteht die Gefahr, daß das Siebband - insbesondere bei ungünstigen Erntebedingungen - verschmutzt und sich mit Blattresten und Erde zusetzen kann. Das Siebband als erstes Element einer Reinigungsstrecke erfüllt dann seine reinigende Wirkung nicht mehr. Zwischen einem Siebband und einem Siebstern findet eine vergleichsweise flächige Übergabe eines Rübenstroms statt, wobei sich dann, wenn das Siebband mitverschwenkt wird und darüberhinaus noch Verschwenkbewegungen um eine etwa horizontale, in Fahrtrichtung liegende Achse, durchgeführt werden müssen, unterschiedliche Spaltflächen unter dem Ende des Siebbands und oberhalb des dieses untergreifenden Siebsterns auftun, durch die infolge der einwirkende Zentrifugalkraft des Siebsterns Rüben verlorengehen können.

Bei einer weiteren bekannten, selbstfahrenden Rübenerntemaschine sind die Entblätterer, die Roder und der Walzengang als Baueinheit zusammengefaßt und auf einem Tragrahmen gelagert, der ebenfalls um eine Hochachse verschwenkbar angeordnet ist. Ein Siebband fällt dabei bereits vorteilhaft weg und der beschriebenen Baueinheit sind Siebsterne als Reinigungsstrecke nachgeschaltet, die am Maschinenrahmen gelagert sind. Infolge der großen Arbeitsbreite dieser Rübenerntemaschine muß der Tragrahmen auch Schwenkbewegungen um eine etwa in Fahrtrichtung liegende Achse ausführen können. Dabei verändert sich die Spaltfläche zwischen dem Ende des Walzengangs und dem darunter befindlichen Siebstern, so daß hier wahlweise zu montierende Schutzgitter Verwendung finden, um einem Rübenverlust an dieser Stelle entgegenzuwirken. Die Stummelwalzen des Walzengangs werden durch Rechen ergänzt, um der durch die Verschwenkung des Walzengangs bedingten Verlagerung entgegenzuwirken. Nachteilig hieran ist, daß sich die Übergabebedingungen der Rüben von dem Walzengang auf den Siebstern je nach Verschwenkung des Tragrahmens verändern.

Der Erfindung liegt die Aufgabe zugrunde, eine Rübenerntemaschine der eingangs beschriebenen Art bereitzustellen, die ohne Siebband und ohne die damit verbundenen Nachteile arbeitet und bei der andererseits bei den verschiedenen Bewegungen des Tragrahmens die Übergabebedingungen der Rüben dennoch konstant bleiben.

Erfindungsgemäß wird dies bei einer selbstfahrenden Rübenerntemaschine der eingangs beschriebenen Art dadurch erreicht, daß der Walzengang und diesem unmittelbar nachgeschaltete Siebsterne gegenüber den Entblätterern und Rodern als selbständige Baueinheit vorgesehen sind, die unabhängig von der Querverschiebbarkeit des Tragrahmens auf der Rübenerntemaschine angeordnet ist, und daß der Walzengang eine die Querverschiebbarkeit der Roder überbrückende Breite aufweist.

Die Erfindung geht von dem Gedanken aus, die Trennung nicht, wie im Stand der Technik, nach dem Walzengang oder nach einem Siebband, sondern zwischen den Rodern und dem Walzengang zu machen. Damit müssen nur noch die Entblätterer und die Roder an dem Tragrahmen gelagert werden. Der Walzengang wird im Vergleich zum Stand der Technik so verbreitert, daß er unabhängig von der Querverschiebbarkeit der Roder jeweils sämtliche gerodeten Rüben aufnehmen kann. Beim Anroden in einem Rübenbestand wird der Tragrahmen mit den Rodern vergleichsweise symmetrisch zur Vertikallängsmittelebene des Fahrzeugs eingestellt, während beim anschließenden Beetroden die Querverschiebbarkeit des Tragrahmens dazu ausgenutzt wird, um eine größere Entfernung zwischen den Rädern des Selbstfahrers und der jeweils stehenbleibenden Rübenreihe zu erzielen. Der ohnehin vorhandene Walzengang wird dazu ausgenutzt, um unabhängig von der Querverschiebbarkeit insbesondere der Roder die gerodeten Rüben jeweils zusammenzuführen und vergleichsweise gleichmäßig an die nachgeschalteten Organe abzugeben. Dies ermöglicht es, daß die Förder-, Reinigungs- und Übergabeverhältnisse vom Walzengang bis zum letzten Siebrad konstantbleiben. Auch die Bedingungen des Rübenflusses in der Reinigungsstrecke bleiben dabei vorteilhaft konstant. Ein Siebband mit seinen Nachteilen, insbesondere der Verschmutzungsgefahr, kommt in Fortfall. Der Walzengang muß nicht umgerüstet werden. Da die Siebsterne der Reinigungsstrecke ortsfest gelagert sind, wird hierdurch der Einschwenkwinkel der Vorderräder nicht verkleinert. Die den einzelnen Reihen zugeordneten Entblätterer und Roder weisen vorteilhaft ein relativ geringes Gewicht auf, da das Gewicht des Walzengangs sowie weiterer, nachgeschalteter Elemente den Tragrahmen nicht belastet. Hinter dem Walzengang kann unmittelbar ein Siebstern Anwendung finden, dessen geringe Bauhöhe sich auch günstig auf die Ausbildung des Walzengangs auswirkt. Der Walzengang bekommt eine geringe Baulänge, d. h. es sind nur noch zwei durchgehende Walzen im Walzengang erforderlich.

Die Baueinheit aus Walzengang und Siebsternen kann auf einem Dreieckrahmen angeordnet sein, der an seinem hinteren Ende in einem räumlichen Lager und in seinen vorderen Bereichen an zwei Hydraulikzylindern aufgehängt ist und dessen Verschwenkbarkeit um eine durch das räumliche Lager gehende Hochachse durch eine zum Maschinenrahmen führende Koppelstange unterbunden ist. Die erste Baueinheit am Tragrahmen besteht damit nur noch aus den Entblätterern und den Rodern. Die zweite Baueinheit aus Walzengang und Siebsternen ist auf einem gesonderten zusätzlichen Rahmen, nämlich dem Dreiecksrahmen, angeordnet. Dieser Dreiecksrahmen besitzt in der Draufsicht etwa dreieckige Form, wobei er an seinem hinteren Ende zu einem räumlichen Lager zusammengeführt ist und sich in Fahrtrichtung nach vorn quer zur Fahrtrichtung verbreitert. In seinen vorderen Bereichen ist der Dreiecksrahmen an zwei separat betätigbaren Hydraulikzylindern aufgehängt, um eine Verschwenkbarkeit im Sinn einer Wankbewegung, also um eine etwa horizontale, sich in Fahrtrichtung erstreckende Achse, zu ermöglichen. Diese Verschwenkbarkeit des Dreiecksrahmens ist erforderlich, damit auch der Tragrahmen mit den Rodern um eine etwa horizontale, sich in Fahrtrichtung erstreckende Achse schwenken und sich an Bodenunebenheiten vor der Vorderachse anpassen kann. Der Tragrahmen und der Dreiecksrahmen sind um die sich in Fahrtrichtung erstreckenden Achsen gleichsinnig verschwenkbar. Damit wird zugleich die Höhenanpassung der Roder über ihre Breite erreicht.

Der Tragrahmen kann an dem Dreiecksrahmen in einem Schiebelager quer zur Fahrtrichtung gelagert sein, d. h. der Tragrahmen und der Dreiecksrahmen sind aneinander geführt, so daß beide Rahmen bei einer Wankbewegung um eine gemeinsame, etwa horizontale und in Fahrtrichtung liegende Achse verschwenken. Demzufolge ändern sich die Übergabebedingungen an keiner Stelle der nachgeordneten Elemente, d. h. die Rüben gelangen unabhängig von solchen Verschwenkbewegungen immer an der gleichen Stelle vom Walzengang auf den nachfolgenden Siebstern bzw. die nachfolgenden Siebsterne. Es gibt auch keine Veränderung von Umfangs- oder Spaltflächen der Siebsterne, durch die Rüben verlorengehen könnten. Obwohl das räumliche Lager am hinteren Ende des Dreiecksrahmens an sich auch eine Verschwenkbewegung des Dreiecksrahmens um eine Hochachse gestatten würde, ist diese Bewegung durch die Koppelstange verhindert, so daß solche Bewegungen den für das Einschlagen der Vorderräder erforderlichen Raum nicht verkleinern. Der Rübenfluß im Bereich der Reinigungsstrecke ist konstant, und zwar unabhängig von der Verschiebbarkeit des Tragrahmens mit den Entblätterern und den Rodern.

In bevorzugter Ausführungsform kann zwischen den Vorderrädern der Rübenerntemaschine ein Siebstern und zwischen diesem und dem Walzengang zwei Siebsterne nebeneinander und vor diesen der Walzengang angeordnet sein. Damit ergibt sich vorteilhaft die Möglichkeit, den Rübenstrom im Bereich des Walzengangs in zwei Schwadströme aufzuteilen und je einen Strom über je eines der nebeneinander angeordneten Siebsterne mit vergleichsweise verringertem Durchmesser zu leiten. Diese beiden Teilströme werden dann auf dem ersten, nachfolgenden Siebstern mit vergrößertem Durchmesser zwischen den Vorderrädern zusammengeführt. Bei dieser Konstellation ergibt sich ein Freiraum zwischen den beiden nebeneinander angeordneten Siebsternen und dem nachgeschalteten Siebstern mit vergrößertem Durchmesser, der für Lenkbewegungen der Vorderräder sinnvoll genutzt werden kann. Die Verwendung von zwei nebeneinander angeordneten Siebsternen unmittelbar nach dem Ende des Walzengangs ist in mehrfacher Hinsicht vorteilhaft. Durch die beiden Siebsterne wird der Schwadstrom geteilt und auseinandergezogen, so daß im Bereich jedes Siebsterns nur ein Teilstrom abgereinigt werden muß. Da die beiden nebeneinander angeordneten Siebsterne einen geringeren Durchmesser aufweisen als der nachgeschaltete, gemeinsame Siebstern, lädt die Reinigungsstrecke nach vorn, also in Richtung auf den Walzengang, vergleichsweise weniger aus, so daß der Walzengang nahe vor den Vorderrädern plaziert werden kann und die gesamte Einrichtung hierdurch kurz baut. Da der Rübenstrom im Bereich des Walzengangs in zwei Teilströme aufgeteilt wird, ergibt sich eine geringere Querförderstrecke für die Rüben und damit wiederum ein kurz bauender Walzengang. Durch die breite Übergabe der beiden Rübenschwade auf die nebeneinander angeordneten Siebsterne wird eine gesonderte Fördereinrichtung für die Rüben oberhalb des Walzengangs entbehrlich.

Der Tragrahmen kann um eine quer zur Fahrtrichtung angeordnete, etwa horizontale Achse schwenkbar am Dreiecksrahmen aufgehängt und mittels eines Oberlenkers gegenüber dem Maschinenrahmen gehalten sein. Damit ist es möglich, eine Nickbewegung des Tragrahmens einzustellen und die Elemente des Entblätterers höhenmäßig gegenüber den Rodern einzustellen. Trotzdem ist dabei die gemeinsame Wankbewegung zwischen Tragrahmen und Dreiecksrahmen nicht beeinträchtigt.

Der Walzengang kann mit seinen Walzen und Schneckenwendelabschnitten so ausgebildet sein, daß er die Rüben in zwei den nachgeschalteten beiden Siebsternen zugeordnete Schwade aufteilt. Hierdurch baut der Walzengang kurz. Er muß nicht umgerüstet werden, sondern ist gleichermaßen und unabhängig von der Verschiebung des Tragrahmens nutzbar. Es genügt, wenn der Walzengang zwei durchgehende Walzen und je zwei Stummelwalzen auf jeder Seite aufweist.

Der Walzengang kann an dem Dreiecksrahmen um eine quer zur vertikalen Längsmittelebene liegende Achse anhebbar gelagert sein. Er stützt sich dabei an dem Dreiecksrahmen ab und kann Hindernissen ausweichen, indem er von diesen abgehoben wird.

Die Walzen des Walzengangs können zusätzlich in einem Hilfsrahmen drehbar gelagert sein, der an dem Dreiecksrahmen aufgehängt ist. Damit ist es möglich, den Hilfsrahmen gegenüber dem Dreiecksrahmen stufenlos einzustellen und den Anstellwinkel des durch die Walzen gebildeten Walzenbetts zu verändern. Damit ist es möglich, den Vertikalabstand zwischen dem Ende des Walzengangs und den beiden nachgeschalteten Siebsternen vorteilhaft groß zu wählen, um durch eine große Fallhöhe die Reinigungswirkung im Bereich der ersten beiden Siebsterne zu erhöhen.

Die Erfindung wird anhand der Zeichnungen weiter beschrieben und erläutert. Es zeigen:
- Figur 1: eine schematisierte Seitenansicht der selbstfahrenden Rübenerntemaschine,
- Figur 2: eine schematisierte Draufsicht der selbstfahrenden Rübenerntemaschine,
- Figur 3: eine Detaildarstellung in Seitenansicht an der Trennstelle zwischen Tragrahmen und Dreiecksrahmen und
- Figur 4: eine Vorderansicht der Rübenerntemaschine bei abgenommenem Tragrahmen gemäß der Pfeilangabe in Figur 3.

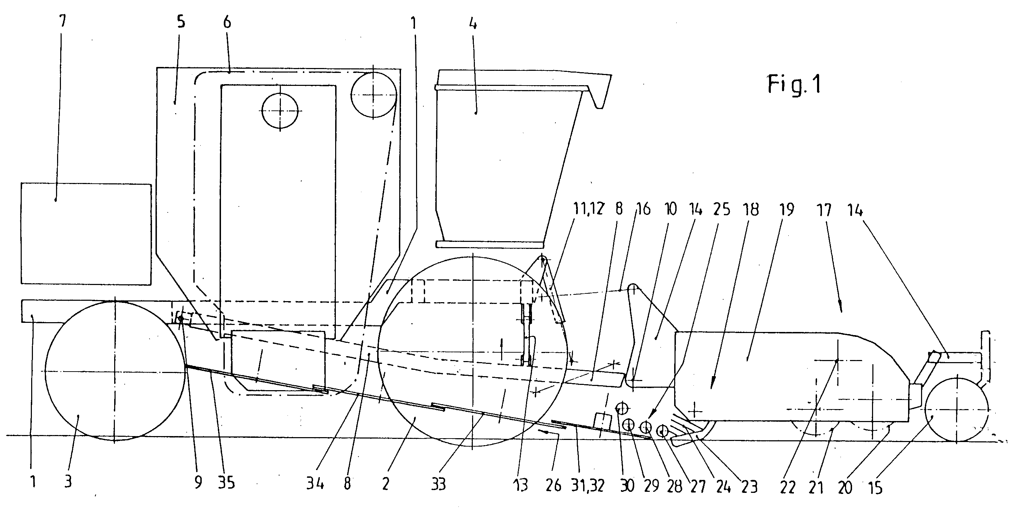

Die in Figur 1 dargestellte selbstfahrende, zweiachsige, mehrreihige Rübenernerntemaschine weist einen Maschinenrahmen 1 auf, an dem Vorderräder 2 und Hinterräder 3 gelagert sind. Der Maschinenrahmen 1 trägt weiterhin eine Fahrerkabine 4, einen Rübenbunker 5 mit Elevator 6 und einen Motor 7.

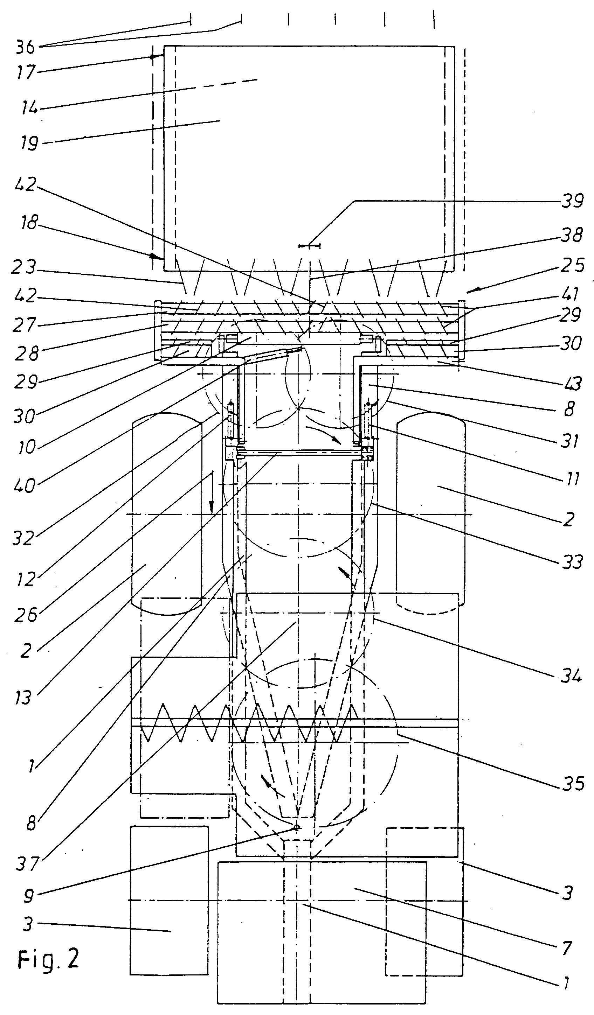

Am Maschinenrahmen 1 ist weiterhin ein Dreiecksrahmen 8 in einem räumlichen Lager 9 aufgehängt. Die Holme des Dreiecksrahmens 8 sind hinten im Bereich des räumlichen Lagers 9 zusammengeführt, erweitern sich in Fahrtrichtung nach vorn und erstrecken sich zwischen den beiden Vorderrädern und unterhalb des Maschinenrahmens 1 hindurch. An seinem vorderen Ende sind die beiden Enden der Holme des Dreiecksrahmens durch eine Lagerwelle 10 miteinander verbunden. Zwischen Maschinenrahmen 1 und Dreiecksrahmen 8 sind etwa im Bereich der Vorderräder 2 zwei Hydraulikzylinder 11 und 12 vorgesehen, die unabhängig voneinander betätigbar sind, so daß damit das nach vorn gerichtete Ende des Dreiecksrahmens 8 um das räumliche Lager 9 gemeinsam angehoben werden kann, wie es z. B. aus der in Figur 1 dargestellten Arbeitsstellung in eine Transportstellung für das Fahren der Rübenerntemaschine auf der Straße erforderlich ist. Weiterhin aber ist es durch die unabhängige Betätigung der beiden Hydraulikzylinder 11 und 12 mögich, den Dreiecksrahmen 8 im Sinn einer Wankbewegung um eine etwa horizontale, in Fahrtrichtung liegende Achse zu verschwenken, wie es beispielsweise für eine Arbeitsfahrt quer zum Hang erforderlich ist. Im Bereich der Hydraulikzylinder 11 und 12 ist zwischen dem Maschinenrahmen 1 und dem Dreiecksrahmen 8 jedoch noch eine Koppelstange 13 eingeschaltet. Auch die Koppelstange ist beidendig, also auf der Seite des Maschinenrahmens 1 und des Dreiecksrahmens 8, in die entsprechende Bewegung ermöglichenden Lagern aufgehängt. DIe Koppelstange selbst erstreckt sich im wesentlichen quer zur Fahrtrichtung (Figur 2) und ist räumlich geneigt angeordnet (Figur 1). Sie dient dazu, den in dem räumlichen Lager 9 aufgehängten Dreiecksrahmen bei Krafteinwirkung an einem unkontrollierten Verschwenken um eine durch das räumliche Lager 9 gehende Hochachse zu hindern. Die Koppelstange hält damit den Dreiecksrahmen 8 immer gezielt im Zwischenraum zwischen den Vorderrädern 2.

Vor dem Dreiecksrahmen 8 ist ein Tragrahmen 14 vorgesehen, der an seinem vorderen Ende auf einem Stützrad 15 abgestützt ist. Der Tragrahmen 14 ist um die Lagerwelle 10 des Dreiecksrahmens 8 im Sinn einer Nickbewegung schwenkbar am Dreiecksrahmen 8 aufgehängt. Zwischen Maschinenrahmen 1 und Tragrahmen 14 ist ein Oberlenker 16 vorgesehen, der in bekannter Weise wie bei einer Dreipunktaufhängung hydraulisch betätigbar ist.

Am Tragrahmen 14 sind als Arbeitswerkzeuge Entblätterer 17 und Roder 18 angeordnet, die im oberen Bereich durch eine Abdeckhaube 19 geschützt sind. Der Entblätterer 17 kann aus einem Häcksler 20, einem Putzer 21 und einem Querförderer 22 für das Rübenblatt bestehen. Der Roder 18 weist in der Regel Rodeschare 23 mit Leitstäben 24 auf. Am Dreiecksrahmen 8 hingegen sind ein Walzengang 25 sowie nachgeschaltete Siebsterne 26 gelagert. Der Walzengang 25 weist zwei über die Arbeitsbreite durchgehende Walzen 27 und 28 sowie diesen nachgeschaltet auf jeder Seite zwei Stummelwalzen 29 und 30 auf. Die Reihe der Siebsterne 26 setzt sich aus zwei vergleichsweise kleinen Durchmesser aufweisenden Siebsternen 31, 32, die nebeneinander quer zur Fahrtrichtung angeordnet sind, sowie nachgeschalteten Siebsternen 33, 34, 35 mit vergleichsweise größerem Durchmesser zusammen. An den letzten Siebstern 35 schließt der Elevator 6 zur Förderung der gereinigten Rüben in den Rübenbunker 5 an.

Es ist damit erkennbar, wie die Arbeitswerkzeuge auf den Tragrahmen 14 einerseits und den Dreiecksrahmen 8 andererseits verteilt sind.

Aus Figur 2 ist erkennbar, daß die Rübenerntemaschine sechsreihig arbeitend ausgebildet ist. Es sind die sechs Rübenreihen 36 schematisch angedeutet. Der Tragrahmen 14 mit den Entblätterern 17 und den Rodern 18 ist versetzt zu einer vertikalen Längsmittelebene 37 des Selbstfahrers symmetrisch zu einer Vertikalebene 38 angeordnet und aus dieser Vertikalebene 38 gemäß Doppelpfeil 39 nach beiden Seiten quer zur Fahrtrichtung verschiebbar geführt, so daß sich mit dem Tragrahmen 14 auch die Entblätterer 17 und die Roder 18 entsprechend dem Doppelpfeil 39 verstellen lassen. Die Verstellung ist so gewählt und angeordnet, daß in der nach links verstellten Endlage die Vertikalebene 38 in die Längsmittelebene 37 fällt, also eine symmetrische Anordnung des Tragrahmens 14 zum Selbstfahrer erreicht wird, wie es für Straßenfahrt oder beim Anroden sinnvoll ist. In der nach rechts verstellten Endstellung besitzt die Vertikalebene 38 von der Längsmittelebene 37 ihre größte Entfernung. Diese Entfernung liegt etwa in der Größenordnung von 20 bis 30 cm. Hierdurch wird erreicht, daß beim Beetroden eine möglichst große Entfernung zwischen der letzten stehenbleibenden Rübenreihe und den rechten Vorder- und Hinterrädern 2, 3 der Rübenerntemaschine entsteht, so daß diese stehenbleibende Rübenreihe nicht beeinträchtigt wird. Diese an sich bekannte seitliche Verschiebung der Roder 18 wird durch die Lagerung des Tragrahmens 14 auf der Lagerwelle 10 und die damit vorgesehene Querverschiebbarkeit erreicht. Zur Querverschiebung dient ein Hydraulikzylinder 40, der zwischen dem Dreiecksrahmens 8 und dem Tragrahmen 14 vorgesehen ist.

Auf den Walzen 27, 28, 29, 30 des Walzengangs 25 sind links- und rechtsgängige Schneckenwendelabschnitte 41, 42 in der in Figur 2 dargestellten Verteilung vorgesehen, so daß der von den Rodescharen 23 ausgehobene Rübenstrom mit Hilfe des Walzengangs 25 in zwei Teilschwade aufgeteilt wird, von denen der eine Teilschwad von dem Siebstern 31 und der andere Teilschwad von dem Siebstern 32 aufgenommen wird. Die Siebsterne 31 und 32 sind gemäß den angegebenen Pfeilen gleichläufig umlaufend angetrieben vorgesehen. Erst an der Übergabestelle auf den Siebstern 33 werden die beiden Teilschwade wieder zusammengeführt und durchlaufen dann den weiteren Teil der Reinigungsstrecke.

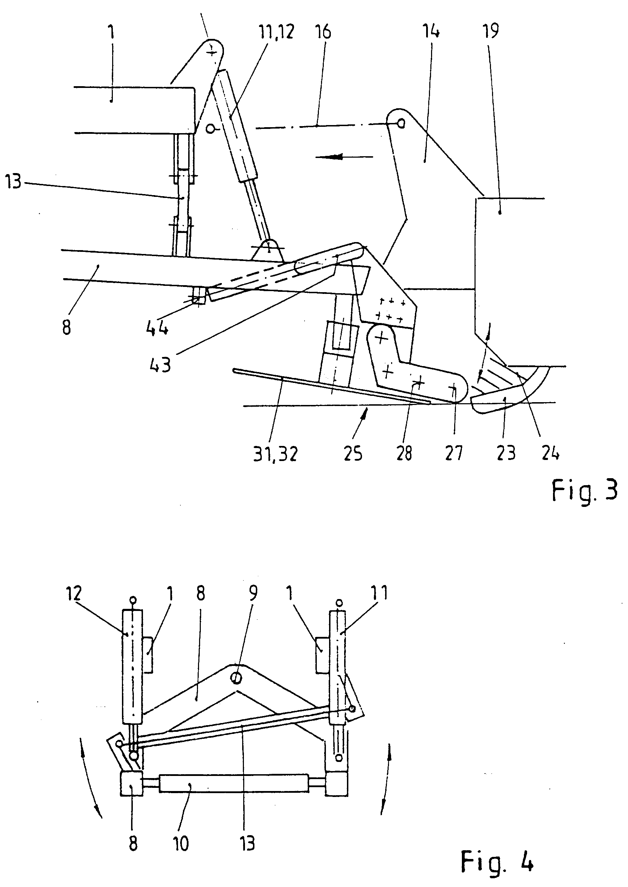

Figur 3 zeigt noch einmal die Schnittstelle zwischen dem Tragrahmen 14 mit den Rodern 18 einerseits und dem Dreiecksrahmen 8 mit dem Walzengang 25 andererseits. Es ist erkennbar, daß der Walzengang 25 am Dreiecksrahmen 8 unter Zwischenschaltung eines Hilfsrahmens 43 aufgehängt ist. Der Hilfsrahmen 43 besitzt eine winklige Ausbildung (Figur 2), ist um eine quer zur vertikalen Längsmittelebene 37 sich erstreckende Achse 44 schwenkbar gelagert und stützt sich von oben lose an dem Dreiecksrahmen 8 auf. Beim Auftreten von Hindernissen auf den Walzengang, insbesondere auf die Walze 27, kann damit der Walzengang 25 nach oben ausweichen. Durch die Verwendung der Siebsterne 31, 32 anstelle eines Siebbands kann der Walzengang 25 vergleichsweise tiefer, also näher am Erdboden, gelagert werden, was einerseits günstig ist, z. B. für eine geringe Aushebehöhe der Rüben durch die Rodeschare 23 und eine geringe Förderhöhe im Bereich des Walzengangs 25. Andererseits besteht bei einer solch niedrigen Lagerung aber die Gefahr, auf Hindernisse aufzufahren, weshalb die nach oben vorgesehene Ausweichmöglichkeit für den Walzengang 25 vorgesehen ist. Es ist weiterhin möglich, nicht dargestellte einstellbare Anschläge zwischen dem Dreiecksrahmen 8 und dem Hilfsrahmen 43 vorzusehen, um das Absinken des Walzengangs 25 einstellbar zu begrenzen.

Zum Roden mit dieser Rübenerntemaschine wird der Dreiecksrahmen durch Betätigung der Hydraulikzylinder 11 und 12 auf eine mittlere Rübenhöhe eingestellt, wobei in Abstimmung hierzu der Oberlenker 16 betätigt wird, um eine relative Höhenanpassung zwischen dem Putzer 21 und den Rodescharen 23, je nach dem durchschnittlichen Wuchs der Rüben, zu erzielen. Beim Arbeiten quer zum Hang müssen die Hydraulikzylinder 11 und 12 unterschiedlich betätigt werden. Beim Anroden verbleibt der Tragrahmen 14 zunächst in seiner symmetrischen Mittelstellung zu der Längsmittelebene 37, während für das anschließende Beetroden der Hydraulikzylinder 40 entsprechend betätigt wird. Der Walzengang 25 nimmt an dieser Querverschiebung nicht teil; er ist jedoch so breit ausgebildet, daß er auch in den beiden Endstellungen der Querverschiebbarkeit der Rodeschare 23 sämtliche Rüben aus den sechs Rübenreihen 36 aufnehmen kann. Durch die angetriebenen Walzen 27, 28, 29 und 30 des Walzengangs 25 werden die Rüben bei ihrer Querförderung einer ersten Reinigung unterzogen. Der Rübenstrom teilt sich in zwei Teilschwade auf, die den Siebsternen 31 und 32 übergeben werden. Für die Reinigung der Rüben ist es sinnvoll, daß an dieser Stelle zwei Teilschwade gebildet sind, also die Rüben jeweils in einer Teilmenge im Bereich der Siebsterne 31 und 32 weiter gereinigt werden. Andererseits ist in maschinentechnischer Hinsicht der insbesondere aus Figur 2 ersichtliche Vorteil gegeben, daß zwischen den Siebsternen 31 und 32 einerseits und dem nachgeschalteten Siebstern 33 Zwickelbereiche freibleiben, in die die Vorderräder 2 bei Lenkbewegungen einschwenken können. Andererseits gestattet es der vergleichsweise geringe Durchmesser der Siebsterne 31 und 32, den Walzengang 25 relativ nahe vor den Vorderrädern 2 zu plazieren und dabei auch die erforderliche vergrößerte Breite des Walzengangs 25 unterzubringen. Dennoch ist der Teil der Maschine vor den Vorderrädern 2 insgesamt kurzbauend.

Die Rüben durchwandern dann die Siebsterne 33, 34 und 35 und werden dabei weiter gereinigt, bevor sie über den Elevator 6 in den Rübenbunker 5 gelangen.

Es ist erkennbar, wie durch die Kopplung des Tragrahmens 14 und des Dreiecksrahmens 8 trotz ungleichmäßiger Betätigung der Hydraulikzylinder 11 und 12 keine sich verändernde Durchtrittsspalte zwischen den Arbeitswerkzeugen entstehen, durch die ein Rübenverlust stattfinden könnte. Die relative Arbeitshöhe der Arbeitselemente zueinander und über die Arbeitsbreite der sechsreihigen Maschine ist damit in allen Phasen gewährleistet, ohne daß es einer Umrüstung mit Schutzgittern, Rechen o. dgl. bedarf.

Figur 4 verdeutlicht noch einmal die Lage des Dreiecksrahmens 8 mit seinem räumlichen Lager 9 im hinteren Bereich der Maschine sowie der Lagerwelle 10, die die vorderen Enden des Dreiecksrahmens 8 zusammenfaßt und auf der der Tragrahmen 14 querverschieblich angeordnet ist. Der Dreiecksrahmen 8 ist an den beiden Hydraulikzylindern 11 und 12 im vorderen Bereich aufgehängt, was schematisch angedeutet ist. Durch die einzelne Betätigung des Hydraulikzylinders 11 oder 12 in Verbindung mit der Führung des Dreiecksrahmens 8 über die Koppelstange 13 am Maschinenrahmen 1 werden die durch die beiden Doppelpfeile angedeuteten Bewegungen ermöglicht, was insbesondere beim Roden quer am Hang erforderlich ist.

### Bezugszeichenliste:

- 1: = Maschinenrahmen
- 2: = Vorderräder
- 3: = Hinterräder
- 4: = Fahrerkabine
- 5: = Rübenbunker
- 6: = Elevator
- 7: = Motor
- 8: = Dreiecksrahmen
- 9: = räumliches Lager
- 10: = Lagerwelle
- 11: = Hydraulikzylinder
- 12: = Hydraulikzylinder
- 13: = Koppelstange
- 14: = Tragrahmen
- 15: = Stützrad
- 16: = Oberlenker
- 17: = Entblätterer
- 18: = Roder
- 19: = Abdeckhaube
- 20: = Häcksler
- 21: = Putzer
- 22: = Querförderer
- 23: = Rodeschar
- 24: = Leitstäbe
- 25: = Walzengang
- 26: = Siebsterne
- 27: = durchgehende Walze
- 28: = durchgehende Walze
- 29: = Stummelwalze
- 30: = Stummelwalze
- 31: = Siebstern
- 32: = Siebstern
- 33: = Siebstern
- 34: = Siebstern
- 35: = Siebstern
- 36: = Rübenreihen
- 37: = Längsmittelebene
- 38: = Vertikalebene
- 39: = Doppelpfeil
- 40: = Hydraulikzylinder
- 41: = Schneckenwendelabschnitte
- 42: = Schneckenwendelabschnitte
- 43: = Hilfsrahmen
- 44: = Achse

## Patentansprüche

1. Selbstfahrende zweiachsige, mehrreihige Rübenerntemaschine, mit einem Maschinenrahmen (1), mit einem die Entblätterer (17) und Roder (18) tragenden und quer zur Längsachse der Rübenerntemaschine verschiebbar gelagerten Tragrahmen (14), und mit einem den Rodern (18) nachgeschalteten Walzengang (25) zum schwadmäßigen Zusammenführen der Rüben mehrerer Reihen sowie mit Siebsternen zum Reinigen und Fördern der Rüben, dadurch gekennzeichnet, daß der Walzengang (25) und diesem unmittelbar nachgeschaltete Siebsterne (31, 32) gegenüber den Entblätterern (17) und Rodern (18) als selbständige Baueinheit vorgesehen sind, die unabhängig von der Querverschiebbarkeit des Tragrahmens (14) auf der Rübenerntemaschine angeordnet ist, und daß der Walzengang (25) eine die Querverschieblichkeit der Roder (18) überbrückende Breite aufweist.

2. Rübenerntemaschine nach Anspruch 1, dadurch gekennzeichnet, daß die Baueinheit aus Walzengang (25) und Siebsternen (31 bis 35) auf einem Dreiecksrahmen (8) angeordnet ist, der an seinem hinteren Ende in einem räumlichen Lager (9) und in seinen vorderen Bereichen an zwei Hydraulikzylindern (11, 12) aufgehängt ist und dessen Verschwenkbarkeit um eine durch das räumliche Lager (9) gehende Hochachse durch eine zum Maschinenrahmen (1) führende Koppelstange (13) unterbunden ist.

3. Rübenerntemaschine nach Anspruch 1 und 2, dadurch gekennzeichnet, daß der Tragrahmen (14) an dem Dreiecksrahmens (8) in einem Schiebelager quer zur Fahrtrichtung gelagert ist.

4. Rübenerntemaschine nach einem oder mehreren der Ansprüche 1 bis 3, dadurch gekennzeichnet, daß zwischen den Vorderrädern (2) der Rübenerntemaschine ein Siebstern (33) und zwischen diesem und dem Walzengang (25) zwei Siebsterne (31, 32) nebeneinander und vor diesen der Walzengang (25) angeordnet sind.

5. Rübenerntemaschine nach Anspruch 1 bis 3, dadurch gekennzeichnet, daß der Tragrahmen (14) um eine quer zur Fahrtrichtung angeordnete, etwa horizontale Achse schwenkbar am Dreiecksrahmen (8) aufgehängt und mittels eines Oberlenkers (16) gegenüber dem Maschinenrahmen (1) gehalten ist.

6. Rübenerntemaschine nach einem oder mehreren der Ansprüche 1 bis 5, dadurch gekennzeichnet, daß der Walzengang (25) mit seinen Walzen (27, 28, 29, 30) und Schneckenwendelabschnitten (41, 42) so ausgebildet ist, daß er die Rüben in zwei den nachgeschalteten beiden Siebsternen (31, 32) zugeordnete Schwade aufteilt.

7. Rübenerntemaschine nach Anspruch 6, dadurch gekennzeichnet, daß der Walzengang (25) an dem Dreiecksrahmen (8) um eine quer zur vertikalen Längsmittelebene (37) liegende Achse (44) anhebbar gelagert ist.

8. Rübenerntemaschine nach Anspruch 6 und 7, dadurch gekennzeichnet, daß die Walzen (27, 28, 29, 30) des Walzengangs (25) in einem Hilfsrahmen (43) drehbar gelagert sind, der an dem Dreiecksrahmen (8) aufgehängt ist.

## Claims

1. Self-driving beet harvester with two axles and several rows, with a machine frame (1), with a topper (17) and beet harvesting device (18) carried by a support frame (14) which is installed movable across to the longitudinal axis of the beet harvester, and with a roller conveyor (25) located behind the beet harvesting devices (18) for leading together the beets of several rows and with dieve-wheels to clean and to transport the beets **wherein** the roller conveyor (25) and the dieve-wheels (31, 32) located directly behind it in comparison to the toppers (17) and the beet harvesting devices (18) are provided as a separate structural unit, which is arranged independently from the movability across of the support frame (14) on the beet harvester and the roller conveyor (25) shows a width which bridges the movability across of the beet harvesting devices (18).

2. Beet harvester according to claim 1, **wherein** the structural unit of roller conveyor (25) and dieve-wheels (31 to 35) are arranged on a triangular frame (8), which at its back ending is hung up in a multidirectional bearing (9) and at its front parts on two hydraulic cylinders (11, 12) and whose movability around a vertical axis which goes through the multidirectional bearing (9) is hindered by a connection bar (13) which goes to the machine frame (1).

3. Beet harvester according to claim 1 and 2, **wherein** the support frame (14) is installed on the triangular frame (8) in a sliding bearing across to the driving direction.

4. Beet harvester according to one or more of the claims 1 to 3, **wherein** between the front wheels (2) of the beet harvester a dieve-wheel (33) and between this and the roller conveyor (25) two dieve-wheels (31, 32) next to each other and in front of those the roller conveyor (25) are arranged.

5. Beet harvester according to claim 1 to 3, **wherein** the support frame (14) is hung up on the triangular frame (8) around an almost horizontal movable axis which is arranged across to the driving direction and is held to the machine frame (1) by an upper three-point link (16).

6. Beet harvester according to one or more of the claims 1 to 5, **wherein** the roller conveyor (25) with its rollers (27, 28, 29, 30) and screw-type sections (41, 42) is formed in that way that it separates the beets in two flows according to the two dieve-wheels (31, 32) located behind.

7. Beet harvester according to claim 6, **wherein** the roller conveyor (25) is installed at the triangular frame (8) around an axis (44) which lies movable across to the vertical longitudinal plane (37).

8. Beet harvester according to claim 6 and 7, **wherein** the rollers (27, 28, 29, 30) of the roller conveyor (25) are arranged turnable in an additional frame (43), which is hung up on the triangular frame (8).

## Revendications

1. Récolteuse de betteraves multi-rangs, automotrice, à deux essieux, comportant un cadre de machine (1), un cadre de support (14) portant les effeuilleuses (17), les arracheuses (18) et monté coulissant transversalement à l'axe longitudinal de la récolteuse de betteraves, et un train de rouleaux (25) monté en aval des arracheuses (18) pour la réunion en andains des betteraves de plusieurs rangs, ainsi que des étoiles de tamisage pour le nettoyage et le transport des betteraves, caractérisée en ce que le train de rouleaux (25) et les étoiles de tamisage (31, 32) montées directement en aval de celui-ci sont prévus en tant qu'unité de construction indépendante par rapport aux effeuilleuses (17) et aux arracheuses, qui est placée sur la récolteuse de betteraves, indépendamment de la possibilité de coulissement transversal du cadre de support (14), et en ce que le train de rouleaux (25) présente une largeur correspondant à la possibilité de coulissement transversal des arracheuses (18).

2. Récolteuse de betteraves selon la revendication 1, caractérisée en ce que l'unité de construction constituée du train de rouleaux (25) et des étoiles de tamisage (31 à 35), est placée sur un cadre triangulaire (8), qui à son extrémité arrière est accroché dans un palier (9) spatial et dans ses zones avant, à deux vérins hydrauliques (11, 12) et dont la possibilité de pivotement autour d'un axe vertical, passant par le palier (9) spatial, est interdite par une tringle d'accouplement (13) menant au cadre de machine (1).

3. Récolteuse de betteraves selon les revendications 1 et 2, caractérisée en ce que le cadre de support (14) est, monté sur le cadre triangulaire (8), dans un palier coulissant, transversalement au sens de marche.

4. Récolteuse de betteraves selon une ou plusieurs des revendications 1 à 3, caractérisée en ce qu'entre les roues avant (2) de la récolteuse de betteraves est placée une étoile de tamisage (33) et entre celle-ci et le train de rouleaux (25), deux étoiles de tamisage (31, 32) côte à côte et devant celles-ci, le train de rouleaux (25).

5. Récolteuse de betteraves selon les revendications 1 à 3, caractérisée en ce que le cadre de support (14) est accroché au cadre triangulaire (8) de manière à pouvoir pivoter autour d'un axe à peu près horizontal, transversal au sens de marche, et est maintenu au moyen d'un bras oscillant supérieur (16), par rapport au cadre de machine (1).

6. Récolteuse de betteraves selon une ou plusieurs des revendications 1 à 5, caractérisée en ce que le train de rouleaux (25) avec ses rouleaux (27, 28, 29, 30) et portions d'hélice de vis sans fin (41, 42), est configuré de manière à partager les betteraves en deux andains associés aux deux étoiles de tamisage (31, 32) montées en aval.

7. Récolteuse de betteraves selon la revendication 6, caractérisée en ce que le train de rouleaux (25) est monté sur le cadre triangulaire (8) de manière à pouvoir être relevé autour d'un axe (44) transversal au plan médian longitudinal (37) vertical.

8. Récolteuse de betteraves selon les revendications 6 et 7, caractérisée en ce que les rouleaux (27, 28, 29, 30) du train de rouleaux (25) sont montés tournants dans un cadre auxiliaire (43), qui est accroché au cadre triangulaire (8).
